# EUROPÄISCHE PATENTANMELDUNG

(11) **EP 3 483 540 A1**
(43) Veröffentlichungstag der Anmeldung: **15.05.2019**
(21) Anmeldenummer: 17201273.4
(22) Anmeldetag: 13.11.2017
(51) Int. Cl.: F25D 29/00, G01K 1/02

(54) **BEHÄLTER ZUM TRANSPORT VON PRODUKTEN**

(71) Anmelder: DeltiLog GmbH, 30559 Hannover (DE)
(72) Erfinder: Stuntebeck, Judith, 30167 Hannover (DE); Stuntebeck, Tobias, 30167 Hannover (DE)
(74) Vertreter: Glawe, Delfs, Moll

(57) **Zusammenfassung**

Die Erfindung betrifft einen Behälter (1) zum Transport von Produkten umfassend wenigstens eine wahlweise durch einen Deckel (4) verschließbare Kammer (3) zur Aufnahme von einem oder mehreren Produkten, wie bspw. Lebensmittel.

Der Behälter (1) weist ein abziehbares, in sich geschlossenes Technikmodul (10) umfassend einen Energiespeicher (11) zur Energieversorgung der Komponenten des Technikmoduls (10), ein Steuerungsmodul (12) und wenigstens ein mit dem Steuerungsmodul (12) verbundenen Sensor (13) zur Erfassung eines Umgebungsparameters auf, wobei das Technikmodul (10) im Verwendungszustand derart an dem Behälter (1) angeordnet ist, dass der wenigstens eine Sensor (13) den Umgebungsparameter in einer der wenigstens einen Kammer (3) des Behälters (1) ermittelt, und wobei das Technikmodul (10) durch Abziehen vollständig vom Behälter (1) abtrennbar ist

## Beschreibung

Die Erfindung betrifft einen Behälter zum Transport von Produkten umfassend wenigstens eine wahlweise durch einen Deckel verschließbare Kammer zur Aufnahme von einem oder mehreren Produkten.

Behälter zum Transport von Produkten, bspw. Lebensmitteln, sind im Stand der Technik bekannt. Sie umfassen im Innern einen Hohlraum, der über eine Öffnung zugänglich ist. Die Öffnung wird wahlweise durch einen Deckel verschlossen.

Es sind weiterhin Behälter mit Überwachungseinrichtungen bekannt, mit denen bspw. die Temperatur im Innern eines Behälters überwacht werden kann, wobei bei Überschreiten von vorgegebenen Grenzwerten ein Alarm ausgegeben wird. Entsprechende Behälter sind insbesondere für den Transport von frischen oder tiefgekühlten Lebensmitteln wie Fisch bekannt, bei denen eine Unterbrechung der Kühlkette regelmäßig ein Verderben, eine Qualitätsminderung oder zumindest eine deutlich reduzierte Haltbarkeit bedeutet. Entsprechende Behälter sind bspw. in der CN 302 967 097 U und der JP S64-54184 A offenbart.

Nachteilig an diesem Stand der Technik ist, dass eine Vorkühlung der mit Überwachungselektronik versehenen Behälter aus dem Stand der Technik, bei welcher der Behälter auf eine niedrige Temperatur abgekühlt wird, um die Temperaturhaltefähigkeit bei dem anschließenden Transport zu erhöhen, nicht möglich ist. Das bei der Vorkühlung unweigerlich entstehende Kondenswasser beschädigt dabei nämlich regelmäßig die Elektronik und insbesondere die Temperaturfühler, die zwingend erforderlichen Batterien als Teil der Überwachungselektronik leiden ebenfalls stark unter einer entsprechenden Vorkühlung.

Darüber hinaus sind die aus dem Stand der Technik bekannten Behälter aufgrund der Überwachungselektronik kostenintensiv.

Der Erfindung liegt die Aufgabe zugrunde, einen Behälter zum Transport von Produkten, insbesondere von Lebensmitteln, zu schaffen, bei dem die aus dem Stand der Technik bekannten Nachteile nicht oder nur noch im verminderten Umfang auftreten.

Gelöst wird diese Aufgabe durch einen Behälter gemäß dem Hauptanspruch. Vorteilhafte Weiterbildungen sind Gegenstand der abhängigen Ansprüche.

Demnach betrifft die Erfindung einen Behälter zum Transport von Produkten umfassend wenigstens eine wahlweise durch einen Deckel verschließbare Kammer zur Aufnahme von einem oder mehreren Produkten, wobei der Behälter ein abziehbares, in sich geschlossenes Technikmodul umfassend einen Energiespeicher zur Energieversorgung der Komponenten des Technikmoduls, ein Steuerungsmodul und wenigstens ein mit dem Steuerungsmodul verbundenen Sensor zur Erfassung eines Umgebungsparameters aufweist, wobei das Technikmodul im Verwendungszustand derart an dem Behälter angeordnet ist, dass der wenigstens eine Sensor den Umgebungsparameter in einer der wenigstens einen Kammer des Behälters ermittelt, und wobei das Technikmodul durch Abziehen vollständig vom Behälter abtrennbar ist.

Der erfindungsgemäße Behälter zeichnet sich dadurch aus, dass die zur Ermittlung von Umgebungsparametern in seinem Innern vorgesehene Elektronik als in sich geschlossenes Technikmodul ausgestaltet ist, welches sich bei Bedarf durch Abziehen vollständig vom Behälter trennen lässt. "In sich geschlossen" bedeutet in diesem Zusammenhang, dass sämtliche für die Erfassung der Umgebungsparameter im Innern des Behälters erforderlichen Komponenten Teil des Technikmoduls sind und daher insbesondere keine elektrotechnischen Schnittstellen zwischen Technikmodul und Behälter erforderlich sind.

Die erfindungsgemäße Ausgestaltung bietet den Vorteil, dass das Technikmodul bei Bedarf und/oder für bestimmte Vorgänge vom Behälter abgezogen werden kann, sodass bspw. das Technikmodul und dessen Komponenten bei einer Vorkühlung des Behälters nicht in Kontakt mit dem dabei entstehenden Kondenswasser kommt. Auch ist es möglich, Behälter und Technikmodule getrennt voneinander vorzuhalten, und einen Behälter nur bei Bedarf, insbesondere bei tatsächlicher Verwendung, mit einem Technikmodul zu versehen. In diesem Fall ist es möglich, dass die Anzahl der vorgehaltenen, häufig günstigen Behälter diejenige der kostenintensiveren Technikmodule übersteigt. Dabei können insbesondere unterschiedliche Behältergrößen vorgehalten werden.

Auch ist bei einer Beschädigung des Behälters regelmäßig nur der eigentliche Behälter auszutauschen, während das Technikmodul - sofern es nicht auch beschädigt ist - mit dem neuen Behälter weiterverwendet werden kann. Bei einer vorgesehenen einmaligen Verwendung eines Behälters kann das Technikmodul vor dessen Vernichtung abgezogen und für einen anderen Behälter wiederverwendet werden. Dem liegt die Erkenntnis zugrunde, dass die Technikmodule in der Regel deutlich kostenintensiver sind als die eigentlichen Behälter, sodass eine Wiederverwendung der Technikmodule regelmäßig auch dann vorteilhaft ist, wenn sich eine Wiederverwendung des eigentlichen Behälters aus ökonomischen Gründen nicht lohnen sollte.

Das erfindungsgemäße Technikmodul erfasst über den wenigstens einen Sensor einen Umgebungsparameter in der wenigstens einen Kammer im Innern des Behälters. Mit "Umgebungsparameter" sind hierbei Parameter der durch die Kammer begrenzten Umgebung bezeichnet und beziehen sich dadurch in erster Linie auf die Eigenschaften der in der Kammer enthaltenen Atmosphäre, in der Regel Luft. Als Sensoren kommen in Betracht Temperatursensoren zur Messung der Temperatur in einer Kammer, Feuchtigkeitssensoren, zur Messung der Feuchtigkeit der in einer Kammer enthaltenen Atmosphäre, ein Drucksensor, zur Messung, ob bspw. ein vorgesehener Über- oder Unterdruck in einer Kammer eingehalten wird, und ein Gassensor, zur Überprüfung der Zusammensetzung der in einer Kammer enthaltenen Atmosphäre. Die vorgennannten Sensoren können in beliebiger Zusammenstellung zu einer Sensorgruppe zusammengefasst werden, die dann die unterschiedlichen Umgebungsparameter in einer Kammer erfassen kann. Für den Transport von frischen Lebensmitteln kann eine Sensorgruppe bspw. einen Temperatursensor, mit dem die Einhaltung einer vorgegebenen Kühltemperatur überprüft wird, und einen Gassensor, mit das Entstehen von Gärungsgasen erkannt werden kann, umfassen.

Weist der Behälter mehr als eine Kammer auf, wobei die Kammern dann durch entsprechende Trennwände voneinander getrennt sind, und soll von diesen Kammern mehr als eine Kammer durch das Technikmodul überwacht werden, ist bevorzugt, wenn das Technikmodul einer der Anzahl der zu überwachenden Kammern wenigstens entsprechende Anzahl von Sensoren oder Sensorgruppen aufweist. Die Sensoren bzw. Sensorgruppen sind dabei so an dem Technikmodul angeordnet, dass im Verwendungszustand jeweils wenigstens ein Sensor oder eine Sensorgruppe wenigstens einen Umgebungsparameter in jeder der zu überwachenden Kammern des Behälters ermittelt.

Damit ein Sensor oder eine Sensorgruppe einen oder mehrere Umgebungsparameter in einer Kammer des Behälters erfassen kann, muss er bzw. sie üblicherweise dicht an der Kammer, häufig sogar unmittelbar in der Kammer bzw. deren Atmosphäre angeordnet sein. Um die Verwendung eines Technikmoduls hierbei zu erleichtern, ist bevorzugt, wenn der Behälter auf seiner Außenseite eine Aufnahme für das Technikmodul mit wenigstens einer Durchführungsöffnung in eine der wenigstens einen Kammer des Behälters aufweist, durch welche im Verwendungszustand wenigstens ein Sensor oder eine Sensorgruppe des Technikmoduls in die jeweilige Kammer geführt ist. Das Technikmodul weist dazu bspw. geeignete Vorsprünge auf, die beim Einsetzen des Technikmoduls durch die genannten Durchführungsöffnungen des Behälters hindurchgeführt werden und an deren freien Enden ein Sensor oder eine Sensorgruppe angeordnet ist. Es ist aber auch möglich, dass ein Sensor oder eine Sensorgruppe an dem freien Ende eines biegeweichen bzw. flexiblen, jedoch drucksteifen Halteelementes angeordnet ist. Mit einem solchen Halteelement kann ein Sensor bzw. eine Sensorgruppe auch durch nicht geradlinig verlaufende Durchführungsöffnung eingeführt werden.

Es hat sich gezeigt, dass je nach Sensortyp eine mit der Innenwand der Kammer bündige oder gegenüber dieser Wand zurückversetzte Anordnung des Sensors nachteilig, insbesondere verfälschend auf die erhaltenen Messergebnisse auswirken kann. Es ist daher bevorzugt, wenn der oder die wenigstens eine Sensor oder Sensorgruppe aus der Durchführungsöffnung heraus in die Kammer ragt. In anderen Worten soll der Sensor bzw. die Sensorgruppe im Verwendungszustand also aus der Durchführungsöffnung hervorstehen und von der Wand, durch welche die Durchführungsöffnung führt, der Kammer entfernt angeordnet sein. Dadurch lassen sich das Messergebnis ggf. verfälschende Wandeffekte vermeiden, zumindest aber verringern.

Es ist bevorzugt, wenn das Technikmodul ein Speichermodul zur Aufzeichnung der von dem wenigstens einen Sensor erfassten Sensordaten umfasst. Über die im Speichermodul abgelegten Daten kann bspw. nach einem Transport überprüft werden, ob vorgegebene Grenzwerte für die erfassten Sensordaten dauerhaft eingehalten wurden. So lässt sich bspw. die Einhaltung einer Kühlkette überprüfen.

Weiterhin kann das Technikmodul mit einem Kommunikationsmodul versehen sein, welches momentan erfasste oder in einem Speichermodul abgelegte historische Sensordaten oder sonstige Hinweise und Warnungen an einen vorgegebenen Empfänger, bspw. über ein Mobilfunknetz, senden kann. Das Senden von Daten kann dabei kontinuierlich erfolgen, wobei die momentan erfassten Sensordaten praktisch in Echtzeit übertragen werden. Es ist aber auch möglich, dass die Sensordaten lediglich in regelmä-ßigen Abständen, bspw. in 10-Minuten-Abständen, versendet werden. Dabei kann es je nach Anwendungsfall ausreichen, jeweils nur die zum Zeitpunkt des Versendens momentan erfassten Sensordaten zu übermitteln. Alternativ ist es möglich, die seit dem letzten Versenden alle angefallenen und in einem Speichermodul abgelegten Sensordaten oder daraus ermittelte Durschnitts- oder sonstige Kennwerte zu übermitteln. Schlussendlich ist es auch möglich, das Senden von Daten auf diejenigen Situationen zu beschränken, in denen das Steuerungsmodul vordefinierte Ereignisse erkennt. So kann das Steuerungsmodul bspw. angewiesen werden, ein Hinweis an den vorgegebenen Empfänger zu verschicken, wenn die von einem Sensor erfasste Temperatur unter- oder oberhalb eines vorgegebenen Grenzwertes liegt, was bspw. einen Bruch der Kühlkette bedeuten kann.

Das Technikmodul kann einen Positionssensor, einen Neigungssensor, einen Beschleunigungssensor und/oder einen Deckelsensor umfassen. Der Deckelsensor ist dabei dazu ausgebildet zu ermitteln, ob der Behälter ordnungsgemäß durch einen Deckel verschlossen ist. Der Deckelsensor kann bspw. als an geeigneter Position angeordneter Helligkeits- oder Entfernungsmesser ausgebildet sein, der im geschlossenen Zustand des Behälters vom Deckel verdeckt wird. Die Daten der vorstehend genannten Sensoren können analog zu den Daten der zur Ermittlung der Umgebungsparameter in einer Kammer vorgesehenen Sensoren gespeichert, übermittelt und als eine Datenübermittlung auslösendes Ereignis verarbeitet werden. Bspw. kann über den Beschleunigungssensor ein Sturz des Behälters festgestellt und ein entsprechender Hinweis an den vorgegebenen Empfänger übermittelt werden.

Es ist weiter bevorzugt, wenn das Technikmodul eine Anzeigevorrichtung umfasst. Über diese Anzeigevorrichtung können bei entsprechender Ausgestaltung erfasste Sensordaten unmittelbar am Technikmodul angezeigt werden. Es kann aber bereits ausreichen, wenn die Anzeigevorrichtung lediglich die Einhaltung von Grenzwerten für die erfassten Sensordaten, bspw. als Nachweis für die Einhaltung der Kühlkette, anzeigen kann. Hierzu können bereits ein- oder zweifarbige LEDs ausreichend sein.

Es ist bevorzugt, wenn das Technikmodul durch eine Sicherungseinrichtung am Behälter gegen unbefugtes Abziehen gesichert ist. Weiter bevorzugt ist es, wenn die Sicherungseinrichtung durch den Deckel des Behälters im geschlossenen Zustand verdeckt ist. Insbesondere wenn das Technikmodul einen Deckelsensor umfasst oder über andere Sensoren das Öffnen des Deckels erfasst werden kann (bspw. über einen Drucksensor bei vorgesehenem Überdruck in der Kammer), ist es möglich, bei unbefugtem Öffnen des Behälters einen Alarm auszugeben. Ein Diebstahl oder eine Manipulation des Technikmoduls kann so erschwert werden.

Bei dem Energiespeicher zur Energieversorgung der Komponenten des Technikmoduls handelt es sich vorzugsweise um einen wieder aufladbaren Energiespeicher, bspw. einen Akkumulator.

Bei dem Behälter handelt es sich vorzugsweise um einen Kühlbehälter, dessen Außenwände und/oder innenliegenden Trennwände aus thermisch isolierendem Material, vorzugsweise aus Schaumpolystrol, sind. Der Behälter ist vorzugsweise zum Transport von Lebensmitteln ausgebildet ist, d.h. die Materialen und Oberflächen sind für diesen Einsatzzweck geeignet ausgestaltet.

Die Erfindung wird nun anhand einer vorteilhaften Ausführungsform unter Bezugnahme auf die beigefügten Zeichnungen beispielhaft beschrieben. Es zeigen:
- Figur 1:: ein erstes Ausführungsbeispiel eines erfindungsgemäßen Behälters;
- Figur 2:: eine Spreng-Schnittansicht des Behälters aus Figur 1 gemäß der Schnittlinie II-II;
- Figur 3:: eine Detaildarstellung des Technikmoduls des Behälters gemäß Figuren 1 und 2;
- Figur 4:: eine Detaildarstellung der Aufnahme am Behälter gemäß Figuren 1 und 2; und
- Figur 5:: schematische Darstellung der Komponenten des Technikmoduls aus Figuren 1 bis 3.

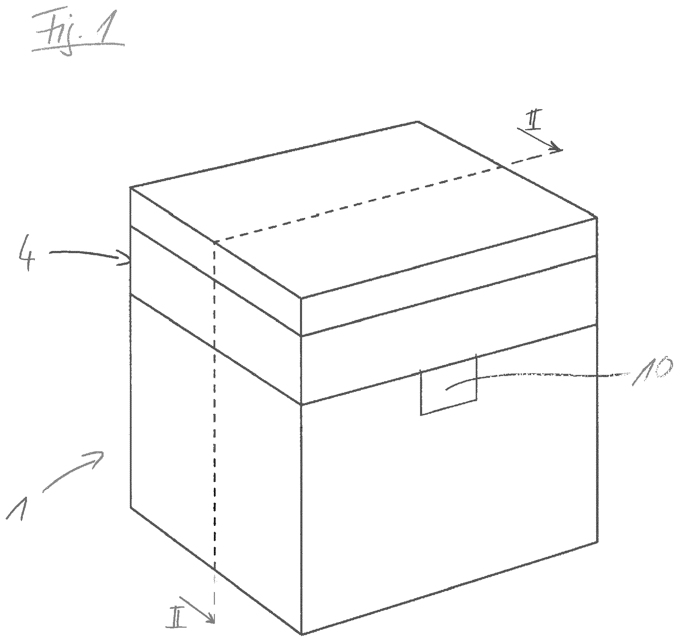

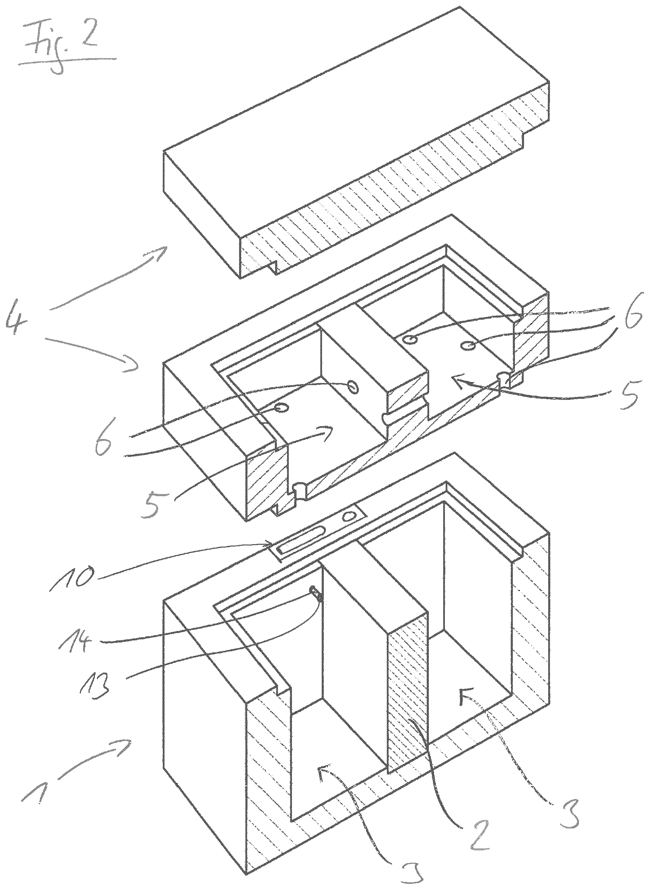

In Figuren 1 und 2 ist ein Behälter 1 zum Transport von Produkten dargestellt. Bei dem Behälter 1 handelt es sich um eine Kühlbox aus Schaumpolystrol, insbesondere für den Transport von Lebensmitteln.

Der Behälter 1 umfasst im Innern zwei durch eine Trennwand 2 getrennte Kühlkammern 3 zur Aufnahme von Produkten, die wahlweise mit einem Deckel 4 verschlossen werden können. Im Deckel 4 sind zwei voneinander getrennte Kühlmittelkammern 5 vorgesehen, die untereinander und - im auf dem Behälter aufgesetzten Zustand des Deckels - mit den Kühlkammern 3 im Behälter über Fluidleitungen 6 verbunden sind. Zur näheren Erläuterung der Funktionsweise des Behälters 1 gemäß Figur 1 mit jeweils zwei Kühlkammern 4 und Kühlmittelkammern 5 wird auf die EP 2 988 080 A1 verwiesen, in welcher der in Figuren 1 und 2 dargestellte Behälter 1 ausführlich beschrieben wird.

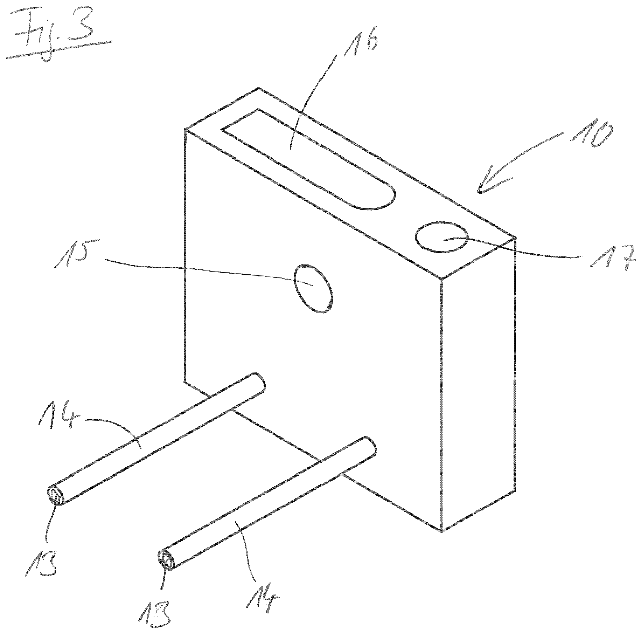

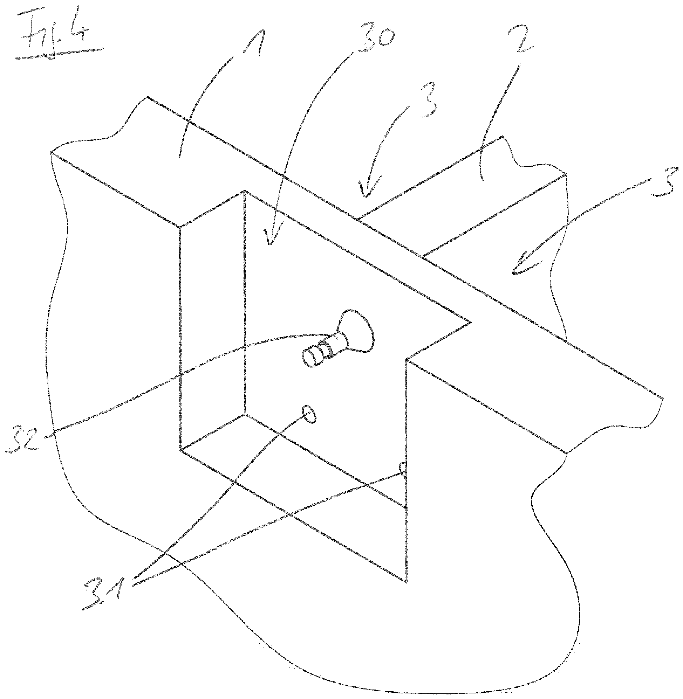

Der Behälter 1 umfasst weiterhin ein in sich geschlossenes und von dem Behälter 1 vollständig abziehbares Technikmodul 10, welches in einer dafür vorgesehene Aufnahme 30 am Behälter eingesetzt ist. Das Technikmodul 10 ist detailliert in Figur 3, die Aufnahme 30 am Behälter 1 in Figur 4 dargestellt.

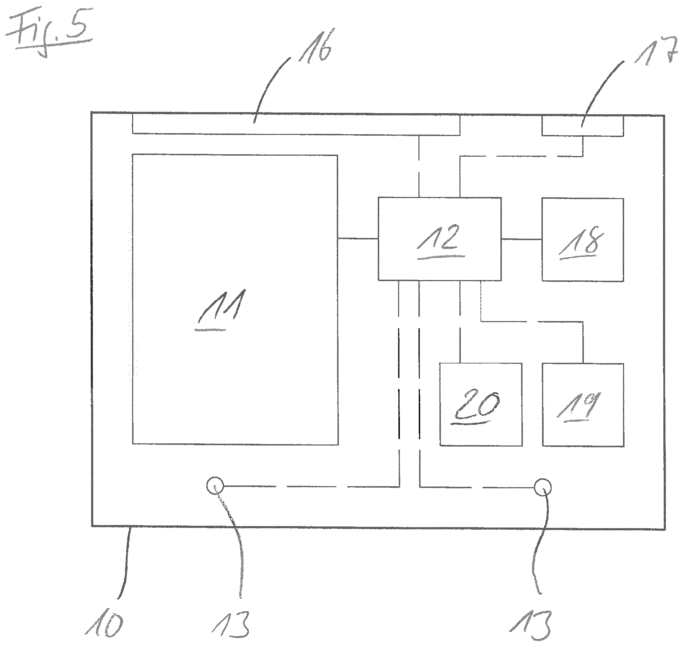

Das Technikmodul 10 ist dazu vorgesehen, einzelne Umgebungsparameter - im vorliegenden Ausführungsbeispiel die Temperatur - in den beiden Kühlkammern 3 des Behälters 1 separat voneinander zu ermitteln und zu verarbeiten. Das Technikmodul 10 umfasst dazu in seinem Innern einen aufladbaren Akkumulator als Energiespeicher 11, der die übrigen Komponenten des Technikmoduls mit Energie versorgt, sowie ein Steuerungsmodul 12. Steuerungsmodul 12 und Energiespeicher 11 sind in Figur 5 gezeigt.

Zur letztendlichen Erfassung der Umgebungsparameter in den beiden Kammern 3 des Behälters 1 umfasst das Technikmodul 10 weiterhin dazu ausgebildete Sensoren 13, die mit dem Steuerungsmodul 11 verbunden sind. Bei den Sensoren 13 handelt es sich im dargestellten Ausführungsbeispiel um Temperatursensoren, es können aber - je nach Verwendungszweck des Behälters - auch andere Sensoren oder Gruppen von mehreren unterschiedlichen Sensoren vorgesehen sein.

Die Sensoren 13 sind an der Spitze von stiftförmigen Vorsprüngen 14 angeordnet, die beim Einsetzen des Technikmoduls 10 in die Aufnahme 30 des Behälters 1 (vgl. Figur 4) durch die dafür vorgesehenen Durchführungsöffnungen 31 geführt werden können und im vollständig eingesetzten Zustand des Technikmoduls 10 auf der Innenseite des Behälters 1 in die jeweilige Kühlkammer 3 ragen, sodass die Sensoren 13 von der jeweiligen Kühlkammerwand beabstandet ist (vgl. Figur 2).

Um ein unbefugtes Abziehen des Technikmoduls 10 vom Behälter zu verhindern, ist eine Sicherungseinrichtung umfassend einen unlösbar am Behälter 1 befestigten Sicherungsstift 32 mit umlaufender Nut, der beim Einschieben des Technikmoduls 10 in die Aufnahme 30 in die dafür vorgesehene Öffnung 15 eingreift. Es kommt bei vollständig eingesetztem Technikmodul 10 dann zu einer formschlüssigen Verbindung mit der Nut, die sich nur durch geeignete Hilfsmittel lösen lässt, nämlich durch Anbringung eines starken Magneten an der Stelle des nachfolgend noch näher beschriebenen Deckelsensors 17.

An der Oberseite des Technikmoduls 10 sind weiterhin eine Anzeigevorrichtung 16, sowie ein als Deckelsensor 17 ausgebildeter Helligkeitssensor vorgesehen. Wie aus Figur 1 ersichtlich sind sowohl Anzeigevorrichtung 16 als auch Deckelsensor 17 bei geschlossenem Behälter 1 von dem Deckel 4 verdeckt. Erst bei anheben des Deckels 4 kann Licht auf den Deckelsensor 17 fallen, wodurch das Öffnen des Behälters 1 festgestellt werden kann. Indem der Deckelsensor 17 gleichzeitig auch die Position zum Öffnen der oben beschriebenen Sicherungseinrichtung vorgibt, lässt sich die Sicherungseinrichtung nur bei geöffnetem Deckel 4 lösen und ist ansonsten verdeckt.

An der Anzeigevorrichtung 16 kann - wie nachfolgend in Zusammenhang mit Figur 5 erläutert - der Verlauf der erfassten Umgebungsparameter in den beiden Kammern 3 wenigstens in Grundzügen angezeigt werden.

Figur 5 zeigt schematisch den inneren Aufbau des Technikmoduls 10. Das Steuerungsmodul 12 ist mit dem Energiespeicher 11 verbunden, wobei die Energieversorgung der übrigen Komponenten, sofern erforderlich, über das Steuerungsmodul 12 erfolgt. Das Steuerungsmodul 12 ist mit den Sensoren 13, dem Deckelsensor 17 sowie der Anzeigevorrichtung 16 verbunden und kann die dort erfassten Sensordaten verarbeiten bzw. die Anzeigevorrichtung 16 ansteuern. Darüber hinaus ist das Steuerungsmodul 12 noch mit einem Speichermodul 18, einem Kommunikationsmodul 19 sowie einem Neigungssensor 20 verbunden. Über den Neigungssensor 20 kann die Orientierung des Behälters 1 ermittelt werden.

Das Steuerungsmodul 12 ist dazu ausgebildet, die von den Sensoren 13, 16, 20 ermittelten Messdaten kontinuierlich aufzuzeichnen und in dem Speichermodul 18 abzulegen. In regelmäßigen Abständen von 10 Minuten versendet das Steuerungsmodul 11 die in dem letzten Zyklus gesammelten Daten oder eine Auswahl daraus, über das Kommunikationsmodul 19 an einen vorgegebenen Empfänger. Darüber hinaus sendet das Steuerungsmodul 12 eine Warnung an den vorgegebenen Empfänger, sowohl wenn die über die Sensoren 13 erfasste Temperatur in einer der Kammern 3 des Behälters 1 um mehr als eine vorgegebene Toleranz von einem vorgegebenen Sollwert abweicht, als auch wenn über den Neigungssensor 20 eine unzulässige Orientierung des Behälters 1 erkannt wird, bspw. weil sich die durch den Deckel 4 verschlossene Seite der Behälter 1 nicht mehr oben ist.

Die Anzeigevorrichtung 16 wird, um Energie zu sparen, nur aktiviert, wenn der Deckelsensor 17 einen geöffneten Deckel 16 anzeigt. Auf der Anzeigevorrichtung 16 kann abgelesen werden, ob bei dem zurückliegenden Transport des Behälters 1 die SollTemperatur in den einzelnen Kammern 3 durchgängig eingehalten und der Behälter 1 immer aufrecht transportiert wurde.

## Patentansprüche

1. Behälter (1) zum Transport von Produkten umfassend wenigstens eine wahlweise durch einen Deckel (4) verschließbare Kammer (3) zur Aufnahme von einem oder mehreren Produkten,
**dadurch gekennzeichnet, dass**
der Behälter (1) ein abziehbares, in sich geschlossenes Technikmodul (10) umfassend einen Energiespeicher (11) zur Energieversorgung der Komponenten des Technikmoduls (10), ein Steuerungsmodul (12) und wenigstens ein mit dem Steuerungsmodul (12) verbundenen Sensor (13) zur Erfassung eines Umgebungsparameters aufweist, wobei das Technikmodul (10) im Verwendungszustand derart an dem Behälter (1) angeordnet ist, dass der wenigstens eine Sensor (13) den Umgebungsparameter in einer der wenigstens einen Kammer (3) des Behälters (1) ermittelt, und wobei das Technikmodul (10) durch Abziehen vollständig vom Behälter (1) abtrennbar ist.

2. Behälter nach Anspruch 1,
**dadurch gekennzeichnet, dass**
wenigstens ein Sensor (13) zur Erfassung eines Umgebungsparameters ein Temperatursensor, ein Feuchtigkeitssensor, ein Drucksensor oder ein Gassensor ist, wobei vorzugsweise mehrere unterschiedliche Sensoren (13) zu einer Sensorgruppe zusammengefasst sind.

3. Behälter nach einem der vorhergehenden Ansprüche,
**dadurch gekennzeichnet, dass**
der Behälter (1) mehr als eine zu überwachende Kammer (3) aufweist, wobei das Technikmodul (10) eine der Anzahl der zu überwachenden Kammern (3) wenigstens entsprechende Anzahl von Sensoren (13) oder Sensorgruppen aufweist, die im Verwendungszustand derart angeordnet sind, dass jeweils wenigstens ein Sensor (13) oder eine Sensorgruppe wenigstens einen Umgebungsparameter in jeder der zu überwachenden Kammer (3) des Behälters (1) ermittelt.

4. Behälter nach einem der vorhergehenden Ansprüche,
**dadurch gekennzeichnet, dass**
der Behälter (1) auf seiner Außenseite eine Aufnahme (30) für das Technikmodul (10) mit wenigstens einer Durchführungsöffnung (31) in eine der wenigstens einen Kammer (3) des Behälters (1) aufweist, durch welche im Verwendungszustand wenigstens ein Sensor (13) oder eine Sensorgruppe des Technikmoduls (10) in die jeweilige Kammer (3) geführt ist, wobei der oder die wenigstens eine Sensor (13) oder Sensorgruppe vorzugsweise aus der Durchführungsöffnung (31) heraus in die Kammer (3) ragt.

5. Behälter nach einem der vorhergehenden Ansprüche,
**dadurch gekennzeichnet, dass**
das Technikmodul (10) ein Speichermodul (18) zur Aufzeichnung der von dem wenigstens einen Sensor (13) erfassten Sensordaten umfasst.

6. Behälter nach einem der vorhergehenden Ansprüche,
**dadurch gekennzeichnet, dass**
das Technikmodul (10) ein Kommunikationsmodul (19) umfasst, in dem kontinuierlich, in regelmäßigen Abständen und/oder bei Eintritt vordefinierter, von dem Steuerungsmodul (12) erfassbarer Ereignisse die momentan erfassten und/oder im Speichermodul (18) abgelegten Sensordaten und/oder Hinweise an einen vorgegebenen Empfänger, vorzugsweise über ein Mobilfunknetz, gesendet werden.

7. Behälter nach einem der vorhergehenden Ansprüche,
**dadurch gekennzeichnet, dass**
das Technikmodul (10) einen Positionssensor, einen Neigungssensor(20), einen Beschleunigungssensor und/oder einen Deckelsensor (17) umfasst.

8. Behälter nach einem der vorhergehenden Ansprüche,
**dadurch gekennzeichnet, dass**
das Technikmodul (10) eine Anzeigevorrichtung (16) umfasst.

9. Behälter nach einem der vorhergehenden Ansprüche,
**dadurch gekennzeichnet, dass**
das Technikmodul (10) durch eine Sicherungseinrichtung (15, 32) am Behälter gegen unbefugtes Abziehen gesichert ist.

10. Behälter nach Anspruch 9,
**dadurch gekennzeichnet, dass**
die Sicherungseinrichtung (15, 32) durch den Deckel (4) des Behälters (1) im geschlossenen Zustand verdeckt ist.

11. Behälter nach einem der vorhergehenden Ansprüche,
**dadurch gekennzeichnet, dass**
der Energiespeicher (11) wieder aufladbar ist.

12. Behälter nach einem der vorhergehenden Ansprüche,
**dadurch gekennzeichnet, dass**
der Behälter (1) ein Kühlbehälter ist, dessen Außenwände und/oder innenliegenden Trennwände aus thermisch isolierendem Material, vorzugsweise aus Schaumpolystrol, sind.

13. Behälter nach einem der vorhergehenden Ansprüche,
**dadurch gekennzeichnet, dass**
der Behälter (1) zum Transport von Lebensmitteln ausgebildet ist.
